# EUROPEAN PATENT APPLICATION

(11) **EP 3 561 827 A1**
(43) Date of publication of application: **30.10.2019**
(21) Application number: 19170918.7
(22) Date of filing: 24.04.2019
(51) Int. Cl.: H01F 41/02, G01D 5/00, B33Y 70/00, B29C 64/106

(54) **MAGENTIC SENSORS PRINTING AND INTERGRATION: DESIGNS, MATERIALS, METHODS, AND PROCESSES**

(30) Priority: 27.04.2018 US 201815964982
(71) Applicant: United Technologies Corporation, Farmington, CT 06032 (US)
(72) Inventor: DARDONA, Sameh, South Windsor, CT Connecticut 06074 (US); BAILEY, Callum, West Hartford, CT Connecticut 06119 (US)
(74) Representative: Dehns

(57) **Abstract**

An additive manufacturing direct writing method of producing a magnetic pattern on a substrate by extruding one or more filaments of a magnetic ink compound through a nozzle at an extrusion speed on to the substrate where there is a relative speed between the nozzle and the target substrate, and curing the plurality of filaments of magnetic ink compound using UV light and/or heat. A unipolar magnetic pattern can be produced by applying a magnetic field strength to the cured magnetic pattern. A bipolar magnetic pattern is produced by folding a unipolar magnetic pattern in half about a fold crease on the substrate, creating a sandwich of alternating magnetic elements between the substrate. The magnetic flux density can be lateral or perpendicular to the substrate. A magnetic position sensor system includes the magnetic pattern and a magnetic sensor.

## Description

### BACKGROUND

The present disclosure relates generally to magnets, and more particularly, to a method and process of direct writing and forming magnets.

Magnets are typically used on rotors, shafts, and actuators to provide position indication to magnetic sensors that are positioned to detect the proximity, or the passing by, of those magnets. Magnetic position sensors that are based on magnets, which are disposed on rotors, shafts, and actuators, are widely used in automation and control systems, safety interlocks, and security systems. For greater position accuracy and/or for use on smaller components, it is advantageous to produce sensor magnets as small as possible. It is also beneficial for some applications to produce magnetic arrays with alternating magnetic polarities. Small magnet arrays for sensor applications can be used on a linear component or on a curved or round component to indicate shaft position, angular displacement, and/or rotational speed.

Magnets can also be used in position sensors on rotors of motors, generators, and turbines for control systems that help improve the performance and efficiency of those devices. For optimum performance, magnets used on moving components such as rotors, shafts, and actuators are as small as possible to minimize their contribution to the linear or rotational inertia of a component, while also being able to fit within tight volumes. Importantly, magnets having a relatively high magnetic flux density are desirable in order for very small magnets to provide the desired response from the magnetic sensors that are used in the position sensing system.

### SUMMARY

An additive manufacturing direct writing method of producing a magnetic pattern on a substrate that is disposed on a movable platform by performing the steps of extruding a plurality of filaments of a magnetic ink compound through a nozzle at an extrusion speed on to the substrate with a relative speed between the nozzle and the substrate, and curing the plurality of filaments of magnetic ink compound. The magnetic ink compound consists of a photopolymer resin base and magnetic particles, and the nozzle diameter is at least three times the maximum particle diameter. The curing is accomplished with UV light and/or heat.

A method of producing an alternating polarity magnetic pattern by performing the steps of (a) extruding a plurality of filaments of a magnetic ink compound through a nozzle on to a foldable substrate comprising a top half and a bottom half, each of the filaments having a filament diameter and filament length, wherein there is a relative speed between the nozzle and the foldable substrate and there is a gap between each of the filaments; (b) curing the plurality of filaments of magnetic ink compound; (c) magnetizing the magnetic pattern in a uniform direction; and (d) folding the foldable substrate, therein producing the alternating magnetic polarity pattern. The filaments on the top half of the substrate at least partially occupy the gap on the bottom half and the filaments on the bottom half of the substrate at least partially occupy the gap on the top half.

### BRIEF DESCRIPTION OF THE DRAWINGS

FIG. 1A is a block diagram showing a process for direct writing of magnets using magnetic ink.
FIG. 1B is a perspective view of a direct-written magnetic pattern.
FIG. 1C is a microscopic enlargement of a cross-section of the magnetic material of FIG. 1B.
FIG. 2A is a perspective view of a direct-written linear magnetic pattern.
FIG. 2B is a graph showing the magnetic flux density vs. linear position of the magnetic pattern of FIG. 2A.
FIG. 3A is a perspective view of a direct-written radial magnetic pattern.
FIG. 3B is a graph showing the magnetic flux density vs. radial position of the magnetic pattern of FIG. 3A.
FIG. 4 is a perspective view of a direct-written axial magnetic pattern.
FIG. 5A is a top view of a direct-written magnetic pattern with alternating lateral magnetic polarities.
FIG. 5B is a graph showing the magnetic flux density vs. linear position of the magnetic pattern of FIG. 5A.
FIG. 6A is a perspective view of a direct-written linear magnetic pattern with unidirectional lateral magnetic polarities.
FIG. 6B is a perspective view showing the magnetic pattern of FIG. 6A being folded onto itself.
FIG. 6C is a perspective view showing the magnetic pattern of FIG. 6A after being folded.
FIG. 7A is a perspective view of a direct-written perpendicular magnetic pattern with unidirectional lateral magnetic polarities.
FIG. 7B is a perspective view showing the magnetic pattern of FIG. 7A being folded onto itself.
FIG. 7C is a perspective view showing the magnetic pattern of FIG. 7A after being folded.

### DETAILED DESCRIPTION

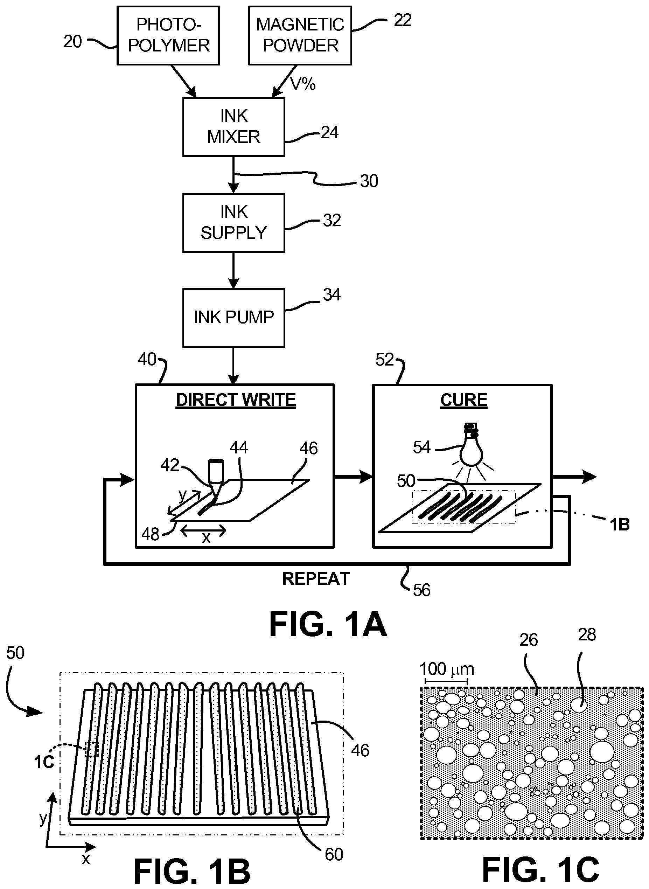

FIG. 1A is a block diagram depicting a process for direct writing of conformal and free-form magnets using magnetic ink. Shown in FIG. 1 are photopolymer 20, magnetic powder 22, ink mixer 24, magnetic ink compound 30, ink supply 32, ink pump 34, nozzle 42, ink filament 44, substrate 46, x-y movable platform 48, magnetic pattern 50, and UV light 54. Also shown in FIG. 1A are the block diagram illustrations for process steps to direct write 40, cure process 52, and repeat step 56. FIG. 1B is an enlargement showing magnetic pattern 50 on substrate 46. Also shown in FIG. 1B are a series of magnetic features 60 that comprise magnetic pattern 50. FIG. 1C is a microscopic enlargement of a cross section of magnetic ink compound 30 of magnetic feature 60. Shown in FIG. 1C are cured photopolymer 26 and magnetic particles 28.

In the illustrated embodiment, photopolymer 20 and magnetic powder 22 are mixed in ink mixer 24 to form magnetic ink 30. As used in this disclosure, photopolymer 20 is a light-activated resin, also known as a photopolymer resin base, light-activated resin, and/or photoresin, which changes properties when exposed to light. A photopolymer that is optimized to respond to ultraviolet (UV) light is also known as a UV-curable resin. Photopolymer 20 may be comprised of monomers and/or oligomers, and photoinitiators (not shown), allowing photopolymer 20 to be soft and flowable in an uncured condition, which then becomes sufficiently viscous or solid as a result of the cross-linking of the monomers and/or oligomers during the light-activating process. The process of photopolymer 20 becoming more viscous or solidifying is also known as curing. Photopolymer 20 cures by the action of photoinitiators within photopolymer 20 absorbing the photon energy during exposure to light of a particular wavelength or range of wavelengths. As photopolymer 20 cures, it becomes sufficiently viscous or solid, while also bonding to any solid material photopolymer 20 is in contact with. In an embodiment, photopolymer 20 may be selected to be responsive to ultraviolet light having a wavelength of about 100 - 425 nanometers (nm). In the illustrated embodiment, photopolymer 20 may be selected to be responsive to ultraviolet light having wavelengths of about 365 - 405 nm. Ultraviolet light sources of about 365 nm and 405 nm wavelengths may be commercially available and readily adaptable to the process of the present disclosure. Because photopolymer 20 cures when photon energy acts on photoinitiators within photopolymer 20, any exposure to light may initiate the curing process. Visible light may initiate the curing process, particularly the shorter wavelengths of visible light near the violet end of the visible light spectrum.

In an alternate embodiment, photopolymer 20 may be sensitive to visible light, thereby requiring that precautions be taken to avoid prematurely exposing photopolymer 20 to visible which could otherwise lead to viscofication or solidification of photopolymer 20 earlier than may be desired. Examples of precautions taken with photopolymer 20 may include handling photopolymer 20 in a darkened environment, or using photopolymer 20 under darkroom safelights such as those having a wavelength near the red end of the visible light spectrum.

In some embodiments, photopolymer 20 may also be responsive to an elevated temperature for initiating the curing process. Higher temperatures may accelerate the curing rate of photopolymer 20, with a temperature of about 70° C (158° F) resulting in a noteworthy rate of curing. Temperatures ranging from about 55° C (131° F) to about 85° C (185° F) may be used to effectuate a noteworthy rate of curing of photopolymer 20.

In the illustrated embodiment, magnetic powder 22 is combined with photopolymer 20 in ink mixer 24 to produce magnetic ink 30. Magnetic powder 22 can be a powder made from an alloy of hard magnetic material. A hard magnetic material has the ability to retain a magnetic flux density B after being exposed to a magnetic field strength H. Alloys of NdFeB, NdFeBH, YFeB, YFeBH, SmCo, rare earth cobalt alloys, strontium ferrite, and Alnico (Fe-Al-Ni-Co-Cu-Ti) alloys are non-limiting examples of materials that have an ability to maintain a relatively strong residual magnetic flux density B after being exposed to a magnetic field strength H.

In the illustrated embodiments, magnetic powder 22 is comprised of alloy particles having a mean effective diameter, on a volume basis, between approximately 1 and 30 micrometers (µm). In the illustrated embodiment, magnetic powder 22 is comprised of alloy particles that are approximately spherical in shape. In other embodiments, magnetic powder 22 may be comprised of particles having an elongated shape, or one or more flattened surfaces. In some embodiments, magnetic powder 22 may be comprised of magnetic particles 28 having various geometries such as disks, rods, fibers, prisms, and other shapes which may have isotropic and/or anisotropic shape morphology. In determining the size and shape of particles for magnetic powder 22, considerations can be given to several factors including the desired resulting magnetic flux density B of magnetic pattern 30, the vector of the resulting magnetic flux density B relative to the surface of magnetic pattern 30, the desired spatial resolution of magnetic pattern 30, rheological considerations relating to ink viscosity and ease of printability, the material properties of the particular alloy being used, the crystalline structure of the particular material being used, the ease or difficulty of producing a particular size, shape, or geometry, and the ratio of magnetic powder 22 to photopolymer 20 in magnetic ink 30. For example, in some embodiments, the temperature/corrosion resistance of magnetic particles 28 is an important consideration. In these embodiments, the geometrical shape of magnetic particles 28 can affect the temperature/corrosion resistance. In other embodiments, the selection of particle shape and geometry, and particular the choice between spherical and non-spherical particle shape, can affect the flowability and printability of magnetic ink 30.

In some embodiments, photopolymer 20 and magnetic powder 22 are combined in a proportion that yields magnetic ink 30 wherein magnetic powder 22 comprises approximately 60% by volume solid loading (v%). A volume solid loading of approximately 60% produces magnetic ink 30 having the consistency of a paste that is capable of being extruded when forced through nozzle 42.

In some embodiments, the volume solid loading may range between about 10% and 85%. In determining the optimum value of volume solid loading of magnetic ink 30, a lower value of volume solid loading results in a more fluid magnetic ink 30, stronger post-cure bond strength, and generally superior mechanical properties of magnetic features 60. Alternatively, a higher value of volume solid loading results in a stronger magnetic flux density B because of the greater volume density of magnetic powder 22. In other embodiments, a higher value of volume solid loading can result in a lower amount of sedimentation of magnetic particles 28 in magnetic ink 30 prior to cure. The material properties of photopolymer 20 and the magnetic and physical properties of magnetic powder 22 enable the adjustment of the value of volume solid loading to obtain the desired results for a particular embodiment. Additionally, the desired magnetic flux density B of magnet 70 helps determine volume solid loading in a particular embodiment.

In the illustrated embodiment, ink mixer 24 combines photopolymer 20 and magnetic powder 22 in a specified ratio to produce magnetic ink 30 having volume solid loading. Ink mixer 24 produces an approximately uniform dispersion of magnetic particles 28 throughout photopolymer 20 to produce magnetic ink 30. Those who are skilled in the art of combining resins are familiar with various methods that may be used to combine photopolymer 20 and magnetic powder 22, including, without limitation, mixing, dispersing, stirring, blending, folding, spinning, vibrating, agitating, and masticating. Magnetic ink 30, after being produced in the method of the present disclosure, becomes ink supply 32.

Magnetic ink 30 held as ink supply 32 will maintain an approximately uniform distribution of magnetic particles 28 throughout photopolymer 20 for a period of time that may be sufficient to allow magnetic ink 30 to be used as described within this disclosure. Over time, particles of magnetic powder 22 in ink supply 32 may stratify, because of the force of gravity acting upon particles of magnetic powder 22. The period of time during which an approximately uniform distribution of magnetic powder 22 throughout photopolymer 20 may range from a few minutes to several days or more, and will vary depending on several factors including, without limitation, the particular type of photopolymer 20 being used, the temperature of ink supply 32, the alloy being used for magnetic powder 22, the shape and size of the particles that comprise magnetic powder 22, the volume solid loading of magnetic powder 22, and whether dispersion agents are present in magnetic ink 30.

In some embodiments, ink mixer 24 may produce a volume of magnetic ink 30 for ink supply 32 that is sufficient for producing one magnetic pattern 50 by means of the present disclosure. In another embodiment, ink mixer 24 may produce a larger volume of magnetic ink 30 for ink supply 32 that is sufficient to produce a plurality of magnetic patterns 50 by means of the present disclosure. Magnetic particles 28 in ink supply 32 may become stratified over time, as described earlier. If stratification of magnetic particles 28 in magnetic ink 30 stored in ink supply 32 occurs, magnetic ink 30 may be returned to ink mixer 24.

In some embodiments, ink mixer 24 may operate continuously, producing magnetic ink 30 that flows intermittently or continuously to ink supply 32 for use in producing magnetic features 50 in accordance with the present disclosure. The intermittent or continuous flow of magnetic ink 30 to ink supply 32 may be used in a manufacturing facility, for example, on an assembly line, where a plurality of magnetic features 50 are produced as an intermittently or continuously running manufacturing process.

Ink pump 34 receives magnetic ink 30 from ink supply 32 and discharges magnetic ink 30 at controlled pressures to direct writer 40. In an embodiment, ink pump 34 may be a positive displacement pump. Ink pump 34 may be a cylinder (not shown) that contains magnetic ink 30, with a piston (not shown) at one end and a fluid connection to direct writer 40 at the other end. In an embodiment, air pressure, hydraulic pressure, spring pressure, or any other suitable source of force or pressure may be applied to the piston to apply force to magnetic ink 30 in the cylinder. In an embodiment, particularly where a small volume of magnetic ink 30 is to be used, the cylinder and piston of ink pump 34 may be a syringe (not shown).

In some embodiments, particularly in a manufacturing facility, such as on an assembly line, ink pump 34 may be a continuously operating pump that provides a continuous flow of magnetic ink 30 to direct writer 40. Ink pump 34 may be a positive displacement pump, such as a screw, gear, diaphragm, or piston positive displacement pump. Those who are skilled in the art of pumping pastes and other highly viscous compounds are familiar with methods that may be used for ink pump 34.

In the illustrated embodiment, direct writer 40 is comprised of nozzle 42 and x-y movable platform 48. Ink pump 34 is fluidly connected to nozzle 42 to deliver magnetic ink 30 to nozzle 42. Nozzle 42 produces ink filament 44 when magnetic ink 30 is forced under pressure by ink pump 34 through nozzle 42. Ink filament 44 attaches to substrate 46 that is held in position on x-y movable platform 48. Ink filament 44 is produced by the movement of x-y movable platform 48 in direction d, resulting in ink filament 44 lying on substrate 46. Moreover, x-y movable platform 48 moves in the y-axis direction as ink filament 44 is extruded from nozzle 42, thereby allowing ink filament 44 on substrate 46 to retain a shape that is representative of ink filament 44 as ink filament 44 extrudes from nozzle 42. The speed of x-y movable platform 48 and the gap between nozzle 42 and substrate 46 are used to control the layer thickness of magnetic pattern 50.

The cross-sectional shape of ink filament 44 is determined partially by the cross-sectional shape of nozzle 42, which may be round, square, rectangular, cruciform, or any other shape. Other factors may also affect the resulting diameter of filament 44, including the rheological properties of magnetic ink 30. In some embodiments, nozzle 42 may have a diameter of about 200 µm - 300 µm, resulting in ink filament 44 having an approximate diameter of about 200 µm - 500 µm. As used in this disclosure, the diameter of nozzle 42 refers to the diameter of the opening at the discharge of nozzle 42, a dimension which has a significant effect on the diameter of ink filament 44. During operation, ink filament 44 is extruded from nozzle 42 at an extrusion speed, and x-y movable platform 48 moves at a platform speed. Draw ratio (DR) is the ratio of platform speed to extrusion speed. In the illustrated embodiment, DR is less than or equal to 1.0, meaning that platform speed is no greater than extrusion speed. Accordingly, the resulting diameter of filament 44 increases relative to the diameter of nozzle 42 as the value of DR decreases. In other embodiments, for example, where magnetic ink 30 is comprised of a viscoelastic monomer, DR may have a value that is greater than one. In these other embodiments, the resulting diameter of filament 44 can be smaller than the diameter of nozzle 42.

In some embodiments, the diameter of nozzle 42 may be smaller than 200 µm, or larger than 300 µm. Using smaller diameters of nozzle 42 may be beneficial for producing magnetic patterns 50 having smaller sizes of magnetic features 60. In some embodiments, smaller diameters of nozzle 42 will allow multiple filaments 44 to make up a particular magnetic feature 60. In these embodiments, a greater magnetic flux density B in the magnetic pattern may be achieved. In other embodiments, a larger diameter of nozzle 42 will allow for larger filaments 44 to be produced. In those other embodiments, the speed of producing magnetic pattern 50 can be increased. In referring to the size of nozzle 42, the measure of diameter is used in this disclosure. However, the term is not meant to limit the nozzle shape to one that is round. As described above, the cross-sectional shape of nozzle 42 can be round, square, rectangular, cruciform, or any other shape. Therefore, as used in this disclosure, diameter refers to an effective round diameter for the cross-sectional exit area of nozzle 42. Moreover, the minimum diameter of nozzle 42 can be dependent on the size of magnetic particles 28 in magnetic ink 30. In the illustrated embodiment, the diameter of nozzle 42 is at least ten times the largest diameter of magnetic particles 28 to avoid clogging of nozzle 42. In other embodiments, the minimum diameter of nozzle 42 can be at least three times the largest diameter of magnetic particles 28. In these other embodiments several factors can affect the relationship between the minimum diameter of nozzle 42 and the largest diameter of magnetic particles 28. Non-limiting examples of these factors include the material properties of photopolymer 20 and volume solid loading.

In the illustrated embodiment, nozzle 42 includes an internal valve (not shown) that opens or closes to allow, or to stop, the flow of magnetic ink 30 from nozzle 42. In an embodiment, the internal valve may be a needle valve. In another embodiment, any other type of valve that is suitable for opening and closing to control the flow of magnetic ink 30 may be used, whether the valve is internal or external to nozzle 42. The internal valve may be controlled electronically or by any other means that allows the flow of magnetic ink 30 to be controlled. In some embodiments, ink pump 34 and nozzle 42 can be combined in an integrated system. In other embodiments, ink pump 34 and/or nozzle 42 can be comprised of Micro-Electro Mechanical Systems (MEMS) components.

In the illustrated embodiment, nozzle 42 is moveable along the z-axis, allowing nozzle 42 to move up, or down, in the direction away from, or toward, substrate 46. During operation of direct writer 40, magnetic pattern 50 is produced by the systematic movement of x-y movable platform 48 as ink filament 44 extrudes from nozzle 42. Ink filament 44 is deposited on substrate 46, having a width and forming a length of ink filament 44 that represents the desired length of magnetic pattern 50. The internal valve on nozzle 42 opens and closes, as required, to define the length of ink filament 44 on substrate 46. After the first width and length of a first ink filament 44 is produced, moveable x-y platform 48 repositions to align nozzle 42 in the desired position to produce a second ink filament 44. The process step of repositioning x-y moveable platform 48 relative to nozzle 42 and depositing a second filament 44 can be referred to as repeat step 56. If magnetic pattern 50 will be comprised of a series of individual ink filaments 44, then repeat step 56 occurs to produce a second ink filament 44. Each subsequent repeat step 56 will deposit a second filament 44 near a first filament 44. In the illustrated embodiment, an approximately uniform separation gap g exists between each filament 44. In some embodiments, the separation gap g between adjacent filaments 44 can vary in size between various filaments 44. In some embodiments it can be desirable to produce magnetic feature 60 that is larger than the diameter of nozzle 42. In these embodiments, this can be achieved by using a value of DR less than 1,0, with a larger size of magnetic feature 60 resulting from a smaller value of DR. In other embodiments, a second ink filament 44 can be deposited on or beside a first ink filament 44. Accordingly, in these embodiments, multiple ink filaments 44 can be stacked and/or produced side-by-side to produce the desired size of a particular magnetic feature 60. The process of producing a new ink filament 44 on top of or alongside a previous ink filament 44 may continue until magnetic pattern 50 is produced having the desired geometry and sizes of magnetic features 60.

In some embodiments, direct writer 40 may deposit one or more short lengths of ink filaments 44 in a line, instead of depositing a continuous length of ink filament 44. In some embodiments, a single point of magnetic ink 30 may be deposited, with a single point of magnetic ink 30 comprising filament 44. In this embodiment, the length of filament 44 is approximately equal to the width of filament 44, with a shape that may be approximately round. A point of magnetic ink 30 so formed may also be referred to as a dot of magnetic ink 30. The size of a point of magnetic ink 30 that is deposited may range from approximately the diameter of nozzle 42 up to a substantially larger globule of magnetic ink 30. In some embodiments, direct writer 40 can produce magnetic pattern 50 being comprised of a pattern of short line segments, arcs, and/or dots of magnetic ink 30. In some embodiments, complex patterns being comprised of a plurality of dots of magnetic ink can be extruded on to substrate 46, thereby producing magnetic pattern 50. In some embodiments, the geometrical patterns and sizes of various magnetic features 60 of magnetic pattern 50 can depend on several factors. Non-limiting examples of the various factors to be considered include the nature of the particular position sensor being produced, the size of the sensor being produced, the degree of resolution that is desired in the sensor being produced, the magnitude of the magnetic flux density B that will be produced in magnetic pattern 50 being produced, and the orientation of the magnetic flux density B vector with respect to the surface of substrate 46.

In the illustrated embodiment, after magnetic pattern 50 is produced by direct writer 40, magnetic pattern 50 must undergo cure process 52. In cure process 52, magnetic pattern 50 is exposed to UV light 54. In an embodiment, UV light 54 has a wavelength of about 365 - 405 nm. During cure process 52, magnetic pattern 50 is exposed to UV light 54 for a period of time that is sufficient to cure magnetic pattern 50. For a given formulation of magnetic ink 30, the period of time required for cure process 52 depends primarily on the intensity of UV light 54, with a shorter time being possible for a higher intensity of UV light 54. The period of time required for cure process 52 also depends on the diameter of ink filament 44, and accordingly, the resulting thickness of magnetic pattern 50, with a shorter time being possible for a smaller diameter for ink filament 44. The period of time required for cure process 52 may also depend on several other factors, including, without limitation, the material properties of photopolymer 20 being used, the volume solid loading of magnetic powder 22 in magnetic ink 30, the size and shape of magnetic particles 28, the wavelength and/or intensity of UV light 54, the ambient temperature of magnetic pattern 50 during cure process 52, the optical density and/or absorption of magnetic ink 30, and the resulting desired value of magnetic flux density B in magnetic pattern 50. Accordingly, the time for cure process 52 can vary significantly in various embodiments. Generally speaking, the period of time for cure process 52 may range from a fraction of a second to several minutes or longer. In some embodiments, the period of time for cure process 52 can be an hour or longer. In an exemplary embodiment, cure process 52 occurs at a temperature of about 60° C (140° F) and exposure to UV light 54.

In some embodiments, UV light 54 can have a wavelength shorter than 365 nm or longer than 425 nm. If the wavelength of UV light 54 is greater than approximately 425 nm, then photopolymer 20 being used is sensitive to visible light. Accordingly, as noted earlier, precautions should be taken to avoid prematurely exposing magnetic ink 30 to visible light. In other embodiments, UV light 54 can be deep UV (DUV). In these other embodiments, exemplary DUV wavelengths can be 248 nm and 193 nm. In yet other embodiments, UV light 54 can be extreme UV (EUV). In these other embodiments, exemplary EUV wavelengths can be 10 - 124 nm.

In some embodiments, cure process 52 may be integrated in direct writer 40 by providing continuous exposure of UV light 54 as ink filament 44 is extruded from nozzle 42 onto substrate 46 (or onto previous magnetic pattern 50, as described earlier). This may be described as cure-while-write, and may be optimized for use in producing magnetic pattern 50 in a relatively fast manner.

In the illustrated embodiment, cure process 52 occurs after magnetic pattern 50 is produced by direct writer 40. This may be accomplished by moving magnetic pattern 50 away from nozzle 42 by moving x-y movable platform 48, thereby positioning magnetic pattern 50 in proximity to UV light 54. In some embodiments, direct writer 40 may remove nozzle 42 from magnetic pattern 50, thereby allowing UV light 54 to illuminate magnetic pattern 50. In other embodiments, UV light 54 can be a focused high-power density UV source. An exemplary high-power density UV source is a UV laser.

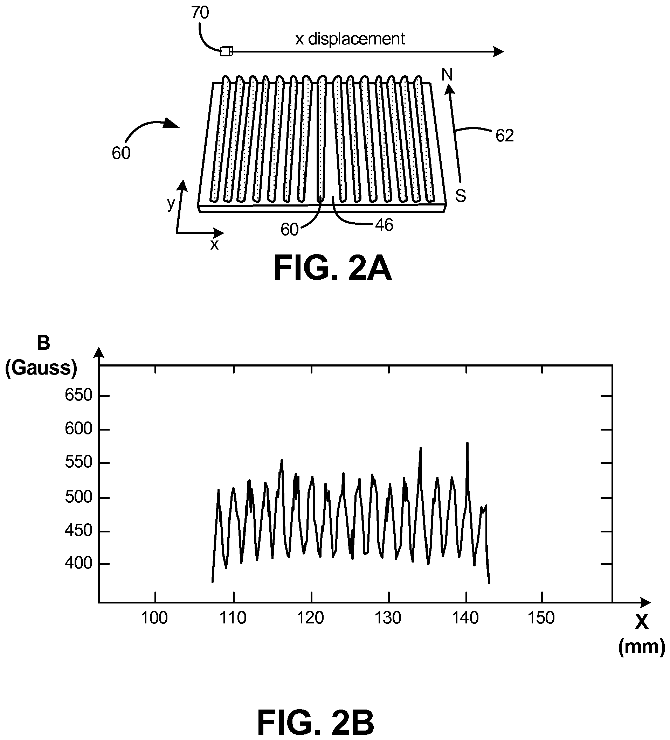

FIG. 2A is a perspective view of a direct-written linear magnetic pattern. Shown in FIG. 2A are substrate 46, magnetic pattern 50, magnetic features 60, magnetic flux density vector 62, and magnetic sensor 70. Magnetic pattern 50 is disposed on substrate 46 and is comprised of magnetic features 60, as described in FIGS. 1A - 1C. Following cure process 52 of magnetic pattern 50, an external magnetic field strength H (not shown) is applied to magnetic features 60 of magnetic pattern 50. Because magnetic features 60 are comprised of magnetic particles 28, which are a hard magnetic material as described in FIGS. 1A - 1C, magnetic features 60 retain magnetic flux density B following removal of the magnetizing field of magnetic field strength H. In the illustrated embodiment, magnetic pattern 50 is generally similar to the embodiment depicted in FIG. 1B, and magnetic flux density vector 62 is approximately parallel to magnetic features 60 in the direction of the y-axis. The resulting magnetic pattern can be referred to as a unipolar magnetic pattern. Magnetic sensor 70 is positioned to move in the x-axis direction in a position proximate to magnetic pattern 50. In the illustrated embodiment, magnetic sensor 70 is a Hall effect sensor. In some embodiments, magnetic sensor 70 can be a magnetoresistive (MR) sensor. In other embodiments, magnetic sensor 70 can be a giant magnetoresistance (GMR), tunnel magnetoresistance (TMR), colossal magnetoresistance (CMR), or extraordinary magnetoresistance (EMR) sensor. In yet other embodiments, magnetic sensor 70 can be an inductive magnetic sensor. Those who are skilled in the art of magnetic sensors are familiar with types of magnetic sensors that can be used.

FIG. 2B is a graph showing the sensed magnetic flux density B vs. linear position of the magnetic pattern of FIG. 2A. In the illustrated embodiment, sensed magnetic flux density B is in Gauss, and linear position in the x-axis direction is in millimeters (mm). The values presented in FIG. 2B were determined by simulation and are representative for the particular embodiment depicted in FIG. 2A. In other embodiments, the sensed magnetic flux density B could be different than that depicted as a result of many factors including the magnetic flux density B in each individual magnetic feature 60, the size of a particular magnetic feature 60, the material that substrate 46 is comprised of, and the separation distance between magnetic pattern 50 and magnetic sensor 70.

In an embodiment, the signal from magnetic sensor 70 could be input to detection circuitry (not shown) that can be used to determine the detection of each magnetic feature 60 based on detecting the pulses in the signal from magnetic sensor 70.

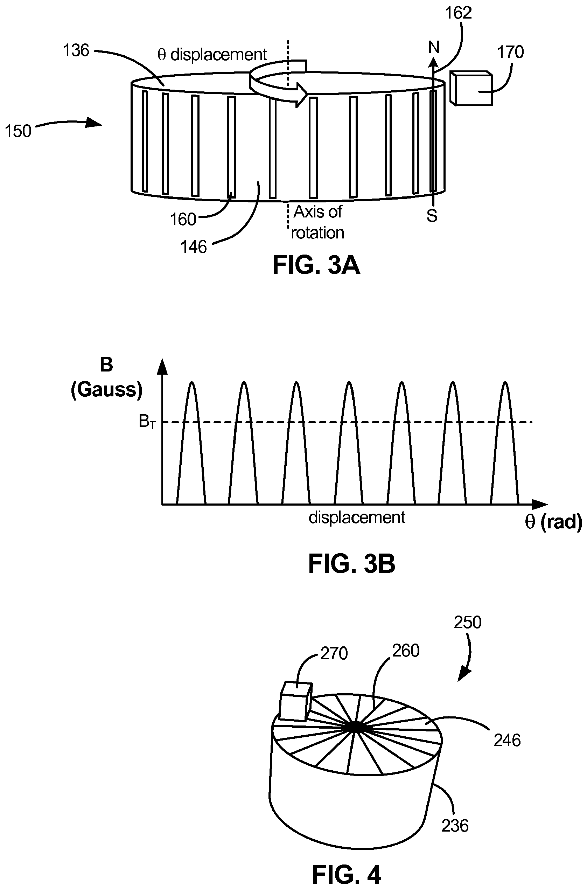

FIG. 3A is a perspective view of a direct-written radial magnetic pattern on a circular substrate. Shown in FIG. 3A are rotating component 136, substrate 146, magnetic pattern 150, magnetic features 160, magnetic flux density vector 162, and magnetic sensor 170. A plurality of magnetic features 160 comprise magnetic pattern 150. Magnetic features 160 are disposed on substrate 146. In the illustrated embodiment, substrate 146 is flexible. The manufacturing process for magnetic pattern 150 is similar to the process described in FIGS. 1A - 1C. Following the manufacturing process of magnetic pattern 150, substrate 142 is affixed to the outer radial surface of rotating component 136. In some embodiments, magnetic pattern 150 can be printed on a curved substrate 146, which is then attached to the outer radial surface of rotating component 136. In other embodiments, the outer surface of rotating component 136 is used as substrate 146, with direct write 40 process (as described in FIG. 1A) occurring directly on to rotating component 136. Magnetic flux density vector 162 is approximately parallel to magnetic features 160, in a direction that is approximately parallel to the axis of rotation of rotating component 136. Magnetic sensor 170 is held in position proximate to magnetic features 160 as shown in FIG. 3A. As rotating component 136 rotates, successive magnetic features 160 pass in the vicinity of magnetic sensor 170, thereby exposing magnetic sensor 170 to the respective magnetic flux density B field of each successive magnetic feature 160. In the illustrated embodiment, magnetic sensor 170 is a Hall effect sensor. In other embodiments, other magnetic sensors can be used, as described in FIG. 2A.

FIG. 3B is a graph showing the calculated magnetic flux density B near magnetic sensor 170 vs. rotational position of rotating component 136 shown in FIG. 3A. Also shown in FIG. 3B is the detection threshold B_{T}. In the illustrated embodiment, magnetic flux density B is in Gauss, and rotary position 0 is in radians. The values presented in FIG. 2B were experimentally determined and are representative for the particular embodiment depicted in FIG. 2A. In an embodiment, the signal from magnetic sensor 170 could be input to a detection circuitry (not shown) that can be used to determine the detection of each magnetic feature 160 based on detecting the pulses in the signal from magnetic sensor 170. In the exemplary embodiment depicted in FIG. 2B, the detection circuitry is set to indicate when the magnetic flux density B near magnetic sensor 170 exceeds detection threshold B_{T}, thereby indicating the presence of an individual magnetic feature 160 in the proximity of magnetic sensor 170.

FIG. 4 is a perspective view of a direct-written axial magnetic pattern on a circular substrate. Shown in FIG. 4 are rotating component 236, substrate 246, magnetic pattern 250, magnetic features 260, and magnetic sensor 270. A plurality of magnetic features 260 comprise magnetic pattern 250. Magnetic features 260 are on substrate 246. In the illustrated embodiment, substrate 246 is disposed on the axial end of a rotating cylinder. In some embodiments, magnetic pattern can be direct written on the axial end of a rotating cylinder, with the rotating cylinder being used as substrate 246. Magnetic sensor 270 is held in position proximate to magnetic features 260 as shown in FIG. 4. As rotating component 236 rotates, successive magnetic features 260 pass in the vicinity of magnetic sensor 270, thereby exposing magnetic sensor 270 to the respective magnetic flux density B field of each successive magnetic feature 260. In the illustrated embodiment, magnetic sensor 270 is a Hall effect sensor. In other embodiments, other magnetic sensors can be used, as described in FIG. 2A. The associated magnetic flux density B in the vicinity of magnetic sensor 270 is not shown because it can be similar to that shown and described in FIG. 3B.

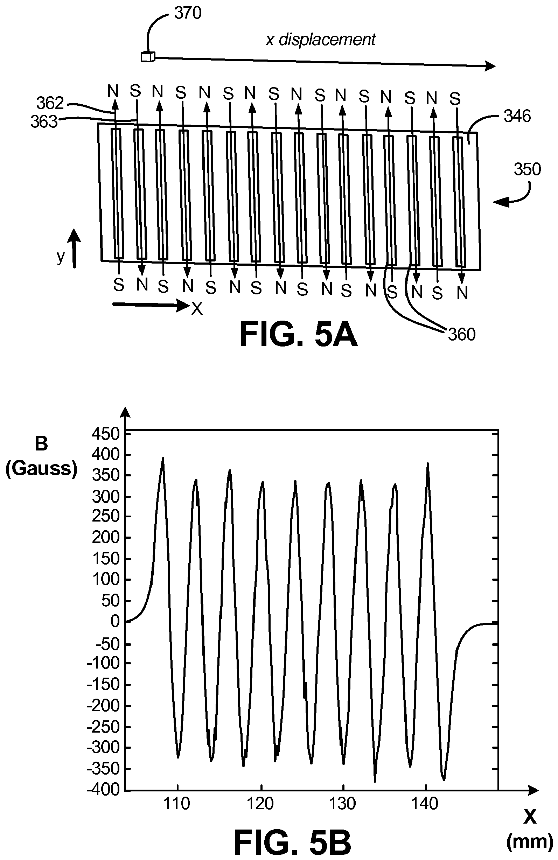

FIG. 5A is a top view of a direct-written magnetic pattern with alternating lateral magnetic polarities. Shown in FIG. 5A are substrate 346, magnetic pattern 350, magnetic features 360, upward magnetic flux density vectors 362, downward magnetic flux density vectors 363, and magnetic sensor 370. A plurality of magnetic features 360 comprise magnetic pattern 350. Magnetic features 360 are disposed on substrate 346. The manufacturing process for magnetic pattern 350 is similar to the process described in FIGS. 1A - 1C. Following the manufacturing process of magnetic pattern 350, alternating magnetic features 362 are subjected to alternating upward and downward magnetic field strengths H (not shown), thereby imparting in alternating magnetic features 360 upward magnetic flux density vectors 362 and downward magnetic flux density vectors 363, as shown in FIG. 5A. The alternating magnetic patterns can be referred to as a bipolar magnetic pattern.

Magnetic sensor 370 is held in position proximate to magnetic features 360 as shown in FIG. 5A. As magnetic pattern 350 moves in the x-direction relative to magnetic sensor 370, successive magnetic features 360 pass in the vicinity of magnetic sensor 370, thereby exposing magnetic sensor 370 to the respective alternating magnetic flux density B fields of upward magnetic flux density vectors 362 and downward magnetic flux density vectors 363, with each successive magnetic feature 360. In the illustrated embodiment, magnetic sensor 370 is a Hall effect sensor. In other embodiments, other magnetic sensors can be used, as described in FIG. 2A.

FIG. 5B is a graph showing the sensed magnetic flux density B vs. linear position of magnetic pattern 360 of FIG. 5A. In the illustrated embodiment, sensed magnetic flux density B is in Gauss, and linear position in the x-axis direction is in mm. The values presented in FIG. 5B were experimentally determined and are representative for the particular embodiment depicted in FIG. 5A. It is noteworthy that graph of sensed magnetic flux density B shows alternating polarities of magnetic flux density B is in Gauss, corresponding to the alternating magnetic flux density B fields of upward magnetic flux density vectors 362 and downward magnetic flux density vectors 363 with each successive magnetic feature 360. As described in FIG. 2B, the sensed magnetic flux density B could be different than that depicted as a result of many factors including the magnetic flux density B in each individual magnetic feature 360, the size of a particular magnetic feature 360, the material that substrate 346 is comprised of, and the separation distance between magnetic pattern 350 and magnetic sensor 370.

In an embodiment, the signal from magnetic sensor 370 could be input to a detection circuitry (not shown) that can be used to determine the detection of each magnetic feature 360 based on detecting the pulses in the signal from magnetic sensor 370. In some embodiments, the polarity reversals and zero-crossings of sensed magnetic flux density B could be particularly advantageous in producing very small feature sizes of magnetic pattern 350 and/or magnetic sensor 370. In other embodiments, the alternating magnetic flux density B of the present disclosure can be used in Micro-Electro Mechanical Systems.

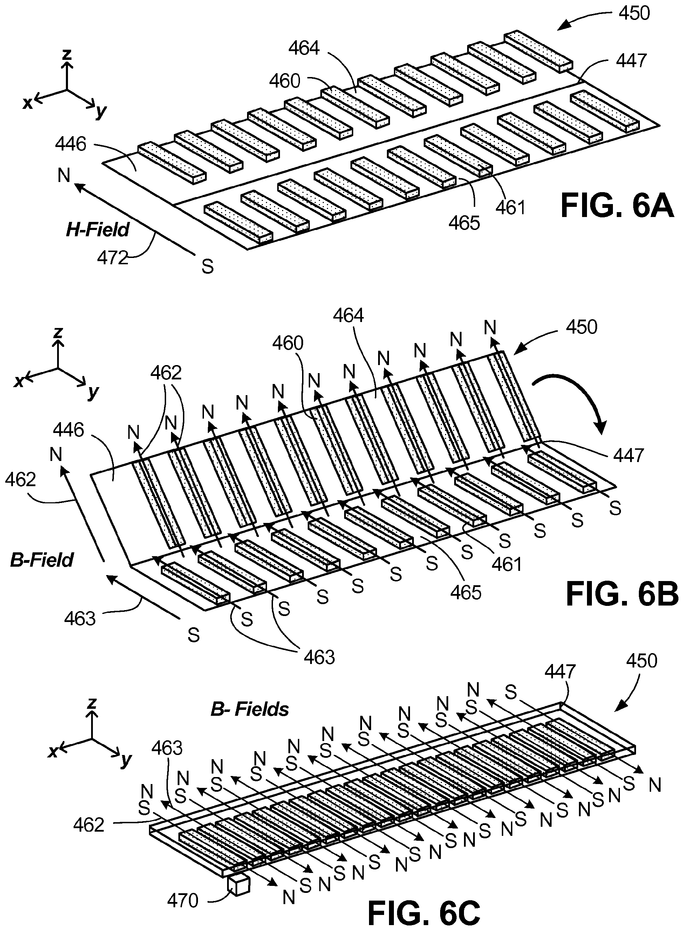

FIG. 6A is a perspective view of a direct-written linear magnetic pattern with unidirectional lateral magnetic polarities. Shown in FIG. 6A are substrate 446, substrate crease 447, magnetic pattern 450, upper half magnetic features 460, lower half magnetic features 461, upper half gaps 464, lower half gaps 465, and magnetic field strength H vector 472. Magnetic pattern 450 is produced by direct writing upper half magnetic features 460 and lower half magnetic features 461 onto substrate 446 by using the direct writing process described in FIGS. 1A - 1C. In the illustrated embodiment, substrate 446 is non-magnetic material. As used herein, a non-magnetic material is highly permeable to a magnetic flux. Each upper half gap 464 is created between adjacent upper half magnetic features 460. Similarly, lower half gap 465 is created between adjacent lower half magnetic features 461. In the illustrated embodiment, substrate crease 447 is approximately parallel to the w-axis, such that substrate crease 447 is approximately perpendicular to upper half magnetic features 460 and lower half magnetic features 461. Additionally, in the embodiment shown, the placement of upper half magnetic features 460 and lower half magnetic features 461 are offset from each other in the x-direction, such that each upper half magnetic feature 460 is adjacent to each lower half gap 465, and each lower half magnetic feature 461 is adjacent to each upper half gap 464. After magnetic pattern 450 is produced, a magnetic field strength H is applied to magnetic pattern 450 to produce a magnetic flux density B in magnetic features 450, as described in FIGS. 1A - 1C. In the illustrated embodiment, magnetic field strength H is applied to magnetic pattern 450 in a direction that is approximately parallel to the y-axis, as shown by magnetic field strength H vector 472. Accordingly, the resulting magnetic flux density B vector (not shown in FIG. 6A) will be in a direction that is approximately parallel to the y-axis.

FIG. 6B is a perspective view showing magnetic pattern 450 of FIG. 6A being folded onto itself along substrate crease 447. Also shown in FIG. 6B are upper magnetic flux density vector 462 and lower magnetic flux density vector 463. As substrate 446 is folded approximately 180 degrees about substrate crease 447, upper half magnetic features 460 will enter lower half gaps 465 and lower half magnetic features 461 will enter upper half gaps 464. In the illustrated embodiment, folding of substrate 446 takes place at substrate crease 447, with substrate crease 447 being a scored or etched line on substrate 446. In other embodiments, substrate crease 447 can be referred to as a fold-line. In these other embodiments, a pre-existing score or etch line does not exist on substrate 446. In some embodiments, substrate crease 446 can be virtual, meaning that magnetic pattern 450 is produced assuming that substrate crease 446 exists in the position shown in FIGS. 6A - 6B. In other embodiments, substrate crease 447 can be produced on substrate 446 following the manufacture of magnetic pattern 450.

FIG. 6C is a perspective view showing magnetic pattern 450 of FIG. 6B after being folded approximately 180 deg. Also shown in FIG. 6C is magnetic sensor 470. Resulting magnetic pattern 450 as shown in FIG. 6C has alternating magnetic polarities in the x-axis direction resulting from alternating upper half magnetic features 460 and lower half magnetic features 461. Accordingly, upper magnetic flux density vector 462 and lower magnetic flux density vector 463 are approximately parallel to each other but in opposite directions that are approximately parallel to the x-axis. The resulting magnetic pattern 450 is substantially similar to that of magnetic pattern 350 described in FIG. 5A, with the essential difference being that upper half magnetic features 460 and lower half magnetic features 461 are sandwiched between substrate 446. Because substrate 446 is made from a non-magnetic material that has a permeability to magnetic flux that is similar to air, the resulting magnetic properties of magnetic pattern 450 are substantially similar to those of magnetic pattern 350 as described in FIG. 5A.

In the illustrated embodiment, magnetic sensor 470 is a Hall effect sensor. In other embodiments, other magnetic sensors can be used, as described in FIG. 2A. Magnetic sensor 470 is positioned to sense magnetic flux density B vs. linear position of magnetic pattern 450. In the illustrated embodiment, the resulting response of magnetic sensor 470 is substantially to that shown and described in FIG. 5B.

In an embodiment, the signal from magnetic sensor 470 could be input to a detection circuitry (not shown) that can respond to the pulses in the signal from magnetic sensor 470. In some embodiments, the polarity reversals and zero-crossings of sensed magnetic flux density B could be particularly advantageous in producing very small feature sizes of magnetic pattern 450 and/or magnetic sensor 470. In other embodiments, the alternating magnetic flux density B of the present disclosure can be used in Micro-Electro Mechanical Systems (MEMS).

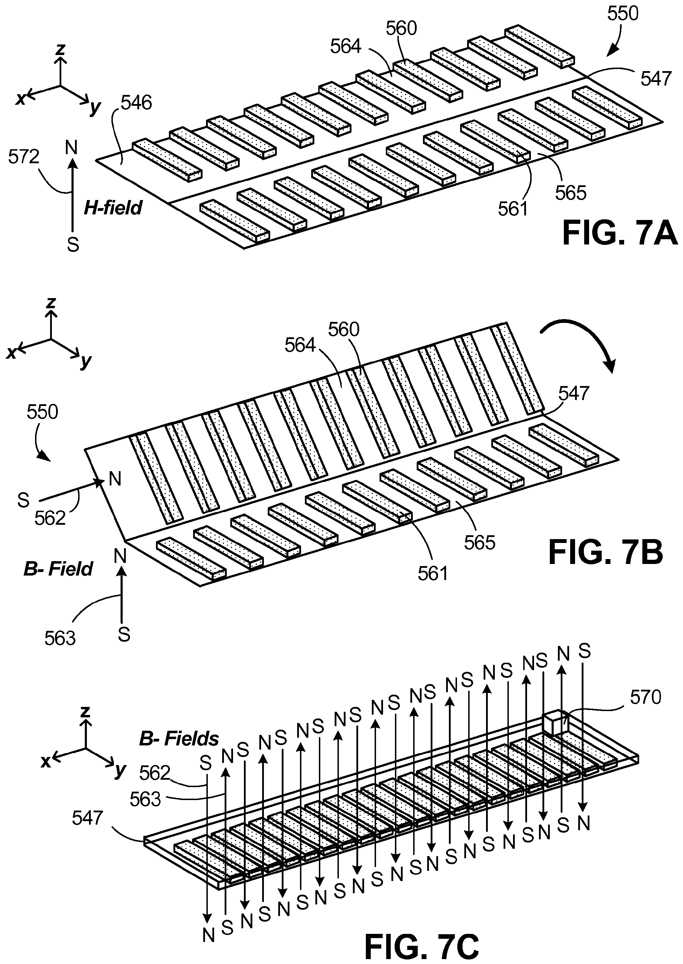

FIG. 7A is a perspective view of a direct-written linear magnetic pattern with unidirectional perpendicular magnetic polarities. Shown in FIG. 7A are substrate 546, substrate crease 547, magnetic pattern 550, upper half magnetic features 560, lower half magnetic features 561, upper half gaps 564, lower half gaps 565, and magnetic field strength H vector 572. Magnetic pattern 550 is produced by direct writing upper half magnetic features 560 and lower half magnetic features 561 onto substrate 546 by using the direct writing process described in FIGS. 1A - 1C, and as described for magnetic pattern 450 in FIG. 6A. In the illustrated embodiment, substrate 546 is non-magnetic material. Each upper half gap 564 is created between adjacent upper half magnetic features 560, and each lower half gap 565 is created between adjacent lower half magnetic features 561, as described for magnetic pattern 450 in FIG. 6A. After magnetic pattern 550 is produced, a magnetic field strength H is applied to magnetic pattern 550 to produce a magnetic flux density B in magnetic features 550. In the illustrated embodiment, magnetic field strength H is applied to magnetic pattern 550 in a direction that is approximately parallel to the z-axis, as shown by magnetic field strength H vector 572. Accordingly, the resulting magnetic flux density B vector (not shown in FIG. 6A) will be in a direction that is approximately parallel to the z-axis. It is noteworthy that magnetic field strength H vector 572 is approximately perpendicular to the x-axis, and therefore, to substrate 546. Accordingly, magnetic pattern 550 can be described as having a perpendicular magnetic pattern.

FIG. 7B is a perspective view showing magnetic pattern 550 of FIG. 7A being folded onto itself along substrate crease 547. Also shown in FIG. 7B are upper magnetic flux density vector 562 and lower magnetic flux density vector 563. As substrate 546 is folded approximately 180 degrees about substrate crease 547, upper half magnetic features 560 will enter lower half gaps 565 and lower half magnetic features 561 will enter upper half gaps 564.

FIG. 7C is a perspective view showing magnetic pattern 550 of FIG. 7B after being folded approximately 180 degrees. Also shown in FIG. 7C is magnetic sensor 570. Resulting magnetic pattern 550 as shown in FIG. 7C has alternating magnetic polarities in the z-axis direction resulting from alternating upper half magnetic features 560 and lower half magnetic features 561, each having a perpendicular magnetic pattern. Accordingly, upper magnetic flux density vector 562 and lower magnetic flux density vector 563 are approximately parallel to each other but in opposite directions that are approximately parallel to the z-axis. The resulting magnetic pattern 550 is an alternating perpendicular magnetic field comprising upper magnetic flux density vector 562, pointing down toward the negative z-axis, and lower magnetic flux density vector 563, and pointing up toward the z-axis. This resulting magnetic pattern can be referred to as a bipolar magnetic pattern.

In the illustrated embodiment, magnetic sensor 570 is a Hall effect sensor. In other embodiments, other magnetic sensors can be used, as described in FIG. 2A. Magnetic sensor 570 is positioned to sense magnetic flux density B vs. linear position of magnetic pattern 550. In an embodiment, the signal from magnetic sensor 570 could be input to a detection circuitry (not shown) that can respond to the pulses in the signal from magnetic sensor 570. In the illustrated embodiment, the magnitude of upper magnetic flux density vector 562 and lower magnetic flux density vector 561 can be greater than that from similar feature sizes of a magnetic pattern having a lateral magnetic orientation, for example, as described in FIGS. 6A - 6C, thereby producing a greater response from magnetic sensors 570. In the illustrated embodiment, magnetic flux density B is greater and more uniform over a larger region in the y-axis (for a given sensing z gap), which relaxes y-alignment constraints on magnetic sensor 570. Accordingly, in other embodiments, the alternating perpendicular magnetic field described in FIGS. 7A - 7C can be produced on a magnetic pattern having smaller feature sizes than is illustrated in FIGS. 7A - 7C.

In some of these other embodiments, the length of magnetic features, as measured in the y-direction, can be shorter than is depicted in the illustrated embodiment. For example, in some embodiments, the length of a magnetic feature (in the y-direction) can be approximately equal to its width (in the x-direction). In these particular other embodiments, the magnetic features can resemble squares or dots, with the resulting magnetic flux density exiting or entering their top or bottom, in a direction that is approximately parallel to the z-axis.

Accordingly, in some other embodiments, repetitions of the process described in FIGS. 7A - 7B can be used to produce a two-dimensional array of alternating perpendicular magnetic features in the x-y plane, thereby having a "checkerboard" appearance. Moreover, repetitions of the process described, for example, in FIG. 2A can be used to produce a two-dimensional array of same-direction perpendicular magnetic features in the x-y plane.

### Discussion of Possible Embodiments

The following are non-exclusive descriptions of possible embodiments of the present invention.

An additive manufacturing direct writing method of producing a magnetic pattern on a substrate comprising the steps of: (a) extruding a plurality of filaments of a magnetic ink compound through a nozzle with a nozzle diameter at an extrusion speed on to the substrate, each of the filaments having a filament diameter and filament length, wherein: there is a relative speed between the nozzle and the substrate; and the ratio of the relative speed to the extrusion speed defines a draw ratio; and (b) curing the plurality of filaments of the magnetic ink compound; wherein the magnetic ink compound comprises: a photopolymer resin base; and magnetic particles with a maximum particle diameter; the substrate is disposed on a movable platform; and the nozzle diameter is at least three times the maximum particle diameter.

The method of the preceding paragraph can optionally include, additionally and/or alternatively, any one or more of the following features, configurations and/or additional components:

A further embodiment of the foregoing method, wherein the draw ratio is less than or equal to 1.0.

A further embodiment of the foregoing method, wherein the method further comprises the steps of: (a) extruding a plurality of first filaments of the magnetic ink compound through the nozzle on to the substrate, each of the first filaments having a first filament diameter and first filament length; (b) curing the plurality of first filaments of the magnetic ink compound; (c) extruding a plurality of second filaments of the magnetic ink compound through the nozzle on to the substrate, each of the second filaments having a second filament diameter and second filament length; (d) curing the plurality of second filaments of the magnetic ink compound; and (e) repeating steps (a), (b), (c), and (d) to extrude and cure multiple layers of filaments to produce the magnetic pattern.

A further embodiment of the foregoing method, wherein the photopolymer resin base is ultraviolet (UV) curable.

A further embodiment of the foregoing method, wherein the photopolymer resin base is curable by exposure to deep UV light or extreme UV light.

A further embodiment of the foregoing method, wherein the source of the UV light is a UV laser.

A further embodiment of the foregoing method, wherein the magnetic particles comprise between about 40% and 85% by volume of the magnetic ink compound.

A further embodiment of the foregoing method, wherein the magnetic particles comprise NdFeB, NdFeBH, YFeB, YFeBH, SmCo, rare earth cobalt, strontium ferrite, Alnico (Fe-Al-Ni-Co-Cu Ti) alloys, or mixtures thereof.

A further embodiment of the foregoing method, wherein a shape of the magnetic particles comprises a sphere, spheroid, rod, fiber, plate, disk, prismatic, or mixtures thereof.

A further embodiment of the foregoing method, wherein the substrate further comprises a channel; and the extruding occurs into the channel.

A further embodiment of the foregoing method, wherein the substrate defines an x-y plane, and the method further comprises the step of applying a magnetic field strength vector to the magnetic pattern.

A further embodiment of the foregoing method, wherein the magnetic field strength vector defines a direction; and the direction is approximately perpendicular to the x-y plane.

A method of producing an alternating polarity magnetic pattern comprising the steps of: (a) extruding a plurality of filaments of a magnetic ink compound through a nozzle on to a foldable substrate comprising a top half and a bottom half, each of the filaments having a filament diameter and filament length, wherein: there is a relative speed between the nozzle and the foldable substrate; and there is a gap between each of the filaments; (b) curing the plurality of filaments of magnetic ink compound; (c) magnetizing the magnetic pattern in a uniform direction; and (d) folding the foldable substrate, therein producing the alternating magnetic polarity pattern; wherein: the filaments on the top half of the substrate at least partially occupy the gap on the bottom half; and the filaments on the bottom half of the substrate at least partially occupy the gap on the top half.

The method of the preceding paragraph can optionally include, additionally and/or alternatively, any one or more of the following features, configurations and/or additional components:
A further embodiment of the foregoing method, wherein the curing is selected from the group consisting of: applying heat, applying UV light, applying deep UV light, applying extreme UV light, and applying UV light and heat.

A further embodiment of the foregoing method, wherein the magnetizing comprises applying a magnetic field having a direction vector primarily in a plane defined by the substrate.

A further embodiment of the foregoing method, wherein the magnetizing comprises applying a magnetic field having a direction vector primarily perpendicular to a plane defined by the substrate.

A further embodiment of the foregoing method, wherein a magnetic position sensor system comprises the alternating polarity magnetic pattern of the foregoing method and a magnetic sensor configured in a position proximate to the alternating polarity magnetic pattern; wherein the alternating polarity magnetic pattern is disposed on a movable component.

A further embodiment of the foregoing system, wherein the movable component is selected from the group consisting of: a linear actuator and a rotating component.

A further embodiment of the foregoing system, wherein the movable component is a Micro-Electro Mechanical Systems component.

A further embodiment of the foregoing system, wherein the magnetic sensor is selected from the group consisting of: Hall effect sensor, giant magnetoresistance sensor, tunnel magnetoresistance sensor, colossal magnetoresistance sensor, extraordinary magnetoresistance sensor, and inductive sensor.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An additive manufacturing direct writing method of producing a magnetic pattern on a substrate comprising the steps of:
(a) extruding a plurality of filaments of a magnetic ink compound through a nozzle with a nozzle diameter at an extrusion speed on to the substrate, each of the filaments having a filament diameter and filament length, wherein:
there is a relative speed between the nozzle and the substrate; and
the ratio of the relative speed to the extrusion speed defines a draw ratio; and
(b) curing the plurality of filaments of the magnetic ink compound; wherein
the magnetic ink compound comprises:
a photopolymer resin base; and
magnetic particles with a maximum particle diameter;
the substrate is disposed on a movable platform; and
the nozzle diameter is at least three times the maximum particle diameter.

2. The method of claim 1, wherein the draw ratio is less than or equal to 1.0.

3. The method of claim 1 or 2, further comprising the steps of:
(a) extruding a plurality of first filaments of the magnetic ink compound through the nozzle on to the substrate, each of the first filaments having a first filament diameter and first filament length;
(b) curing the plurality of first filaments of the magnetic ink compound;
(c) extruding a plurality of second filaments of the magnetic ink compound through the nozzle on to the substrate, each of the second filaments having a second filament diameter and second filament length;
(d) curing the plurality of second filaments of the magnetic ink compound; and
(e) repeating steps (a), (b), (c), and (d) to extrude and cure multiple layers of filaments to produce the magnetic pattern.

4. The method of any preceding claim, wherein the photopolymer resin base is ultraviolet (UV) curable, wherein, optionally, the photopolymer resin base is curable by exposure to deep UV light or extreme UV light, wherein, optionally, the source of the UV light is a UV laser.

5. The method of any preceding claim, wherein the magnetic particles comprise between about 40% and 85% by volume of the magnetic ink compound.

6. The method of any preceding claim, wherein the magnetic particles comprise NdFeB, NdFeBH, YFeB, YFeBH, SmCo, rare earth cobalt, strontium ferrite, Alnico (Fe-Al-Ni-Co-Cu Ti) alloys, or mixtures thereof, and/or wherein a shape of the magnetic particles comprises a sphere, spheroid, rod, fiber, plate, disk, prismatic, or mixtures thereof.

7. The method of any preceding claim, wherein:
the substrate further comprises a channel; and
the extruding occurs into the channel.

8. The method of any preceding claim, wherein the substrate defines an x-y plane, and the method further comprises the step of applying a magnetic field strength vector to the magnetic pattern, wherein, optionally:
the magnetic field strength vector defines a direction; and
the direction is approximately perpendicular to the x-y plane.

9. A method of producing an alternating polarity magnetic pattern comprising the method of claim 1,
wherein there is a gap between each of the filaments, and
the method further comprising:
(c) magnetizing the magnetic pattern in a uniform direction; and
(d) folding the foldable substrate, therein producing the alternating magnetic polarity pattern; wherein:
the filaments on the top half of the substrate at least partially occupy the gap on the bottom half; and
the filaments on the bottom half of the substrate at least partially occupy the gap on the top half.

10. The method of claim 9, wherein the curing is selected from the group consisting of: applying heat, applying UV light, applying deep UV light, applying extreme UV light, and applying UV light and heat.

11. The method of claim 9 or 10, wherein the magnetizing comprises applying a magnetic field having a direction vector primarily in a plane defined by the substrate, or wherein the magnetizing comprises applying a magnetic field having a direction vector primarily perpendicular to a plane defined by the substrate.

12. A magnetic position sensor system comprising:
the alternating polarity magnetic pattern of claim 13; and
a magnetic sensor configured in a position proximate to the alternating polarity magnetic pattern;
wherein the alternating polarity magnetic pattern is disposed on a movable component.

13. The system of claim 12, wherein the movable component is selected from the group consisting of: a linear actuator and a rotating component.

14. The system of claim 12 or 13, wherein the movable component is a Micro-Electro Mechanical Systems component.

15. The system of claim 12, 13 or 14, wherein the magnetic sensor is selected from the group consisting of: Hall effect sensor, giant magnetoresistance sensor, tunnel magnetoresistance sensor, colossal magnetoresistance sensor, extraordinary magnetoresistance sensor, and inductive sensor.
